# EUROPÄISCHE PATENTANMELDUNG

(11) **EP 1 154 284 A1**
(43) Veröffentlichungstag der Anmeldung: **14.11.2001**
(21) Anmeldenummer: 00128703.6
(22) Anmeldetag: 29.12.2000
(51) Int. Cl.: G01S 17/74

(54) **Multifunkionelle optische Zielvorrichtung**

(30) Priorität: 12.05.2000 CH 941002000
(71) Anmelder: OERLIKON CONTRAVES AG, 8050 Zürich (CH)
(72) Erfinder: Gerber, Peter, 8965 Berikon (CH); Fardim, Rahim, 8953 Dietikon (CH); Ochsner, Fabian, 5415 Nussbaumen (DE)
(74) Vertreter: OK pat AG

(57) **Zusammenfassung**

Zielvorrichtung (1) bestehend aus einer Zieleinheit, die einen Halbleiterlaser zum Anvisieren eines Zieles (14) mittels eines von dem Halbleiterlaser ausgesendeten Laserstrahles (11) enthält, und einer Identifikationseinheit, die mittels des Laserstrahles (11) von dem Ziel (14) Identifikationsinformation abfragt. Desweiteren enthält die Zielvorrichtung (1) eine Beleuchtungseinheit, die es ermöglicht mittels des Laserstrahles (11) das Ziel (14) zu beleuchten. Der Halbleiterlaser wird sowohl für der Zieleinheit, die Identifikationseinheit als auch die Beleuchtungseinheit eingesetzt.

## Beschreibung

Die Erfindung bezieht sich auf optische multifunktionelle Zielvorrichtungen, nach dem Oberbegriff des Patentanspruchs 1.

Waffen werden im militärischen oder militärähnlichen Einsatz verwendet. Im zivilen Bereich werden Waffen hauptsächlich für die Jagd oder den Sport eingesetzt. Vermehrt gibt es auch realistische Simulationsspiele, die es mehreren Mitspielern ermöglichen, kampfähnliche Situationen zu erleben.

Heutzutage werden Waffen häufig mit optischen Zielvorrichtungen ausgestattet, die ein genaues Anvisieren des Zieles ermöglichen, um so die Treffergenauigkeit zu erhöhen. Eine neue Art dieser optischen Zielvorrichtungen macht von einem Laser Gebrauch, der einen Laserstrahl aussendet. Dieser Laserstrahl kann als Lichtpunkt auf dem Ziel gesehen werden. Je nach Wellenlänge des Laserlichtes muss der 'Schütze' dazu eine geeignete Brille, z.B. eine Nachtsichtbrille, tragen.

Um bei Simulationen, im Gefecht oder im Simulationsspiel eine Unterscheidung der verschiedenen Beteiligten zu ermöglichen, kann eine Zielvorrichtung durch eine Identifikationseinheit erweitert werden. Ein typisches Laseridentifikations/Simulationssystem ist in der Europäischen Patentanmeldung mit Anmeldenummer 97120818.6 (Publikationsnummer EP 0 859 243 A1), des Anmelders der vorliegenden Anmeldung beschrieben. Bei einem solchen Laseridentifikations/Simulations-System tragen die Beteiligten auf ihren Körpern vorzugsweise Gurtvorrichtungen mit Sensoren und Waffen mit einem Systemgerät, welches einen modulierten Laserstrahl aussendet. Vorzugsweise handelt es sich bei diesen Gurtvorrichtungen um die in den folgenden europäischen Patentanmeldungen beschriebenen Gurtvorrichtung: EP 0 859 243 A1, EP 0 836 068 A1 und EP 0 836 069 A1. Der modulierte und/oder codierte Laserstrahl übermittelt eine Nachricht von der Waffe des Schützen an die Gurtvorrichtung des anvisierten Beteiligten. Diese Nachricht verlangt von der Gurtvorrichtung des anvisierten Beteiligten sich, bzw. den Träger der Gurtvorrichtung, zu identifizieren. Zu diesem Zweck kann der anvisierte Beteiligte einen Bestätigungscode an den Schützen retournieren. Ein solches Laseridentifikations/Simulations-System ermöglicht - je nach Ausführungsform - die Identifikation von befreundeten Beteiligten und das Erkennen gegnerischer Beteiligter. Man kann dieses System für die sogenannte Freund/Feind-Erkennung einsetzen.

Es besteht auch die Möglichkeit, eine individuelle Identifikation des Schützen zu realisieren, indem man z.B. den Lichtpunkt verschiedenartig ausbildet (z.B. als Dreieck oder als zwei Punkte).

Ein laser-basiertes Kampf-Simulationssystem ist in dem US Patent 5,788,500 des Anmelders der vorliegenden Anmeldung beschrieben. Dieses System macht von einem speziellen Laser Gebrauch, der einen kontinuierlichen Laserstrahl aussendet. Diese Art des Lasers wird Continuous Wave (CW) Laser genannt.

Je nach Situation wäre es für die Beteiligten nützlich, eine Taschenlampe benutzen zu können, um unter widrigen Umständen die Sicht zu verbessern oder um gewisse Ziele auszuleuchten. Selbst in Situationen, wo die verschiedensten Beteiligten kaum noch anhand ihrer Kleidung oder Ausrüstung unterscheidbar sind, ist eine Taschenlampe oft ein nützlicher Ausrüstungsgegenstand. Gerade bei Nachteinsätzen bedarf es einer Taschenlampe, um es einem Soldaten, der eine Nachtsichtbrille trägt, zu ermöglichen die Umgebung auszuleuchten bzw. spezielle Punkte in der Umgebung anzuleuchten. Eine solche Taschenlampe, wie auch jeder andere Ausrüstungsgegenstand, bringt aber auch Nachteile mit sich. So spielt unter anderem das Gewicht und die Grösse im mobilen Einsatz eine wesentliche Rollen. In einigen Fällen wirkt sich das Gewicht der Ausrüstung bereits negativ auf die Beweglichkeit und Geschwindigkeit eines Soldaten aus. Auch ist die Möglichkeit der Benutzung eines weiteren Ausrüstungsgegenstand teilweise eingeschränkt, zum Beispiel wenn eine Waffe mit beiden Händen im Anschlag gehalten wird.

Das Geschehen auf dem Gefechtsfeld wird immer komplexer und entwickelt sich mit zunehmendem Tempo. Entscheidungen müssen in Sekundenbruchteilen getroffen werden. Fehlentscheidung können dabei fatal sein. Es bleibt oft nur wenig Zeit, um die Flut an Informationen zu verarbeiten. Dies verlangt die volle Aufmerksamkeit der Beteiligten. Das Hantieren mit weiteren Ausrüstungsgegenständen, wie z.B. der bereits genannten Taschenlampe, ist nur in Ausnahmesituationen möglich. Eine solche Taschenlampe müsste auch extrem robust sein, um für den militärischen Einsatz zugelassen zu werden.

Es ist eine Aufgabe der Erfindung, eine neuartige Beleuchtungseinheit bereitzustellen. Insbesondere ist es eine Aufgabe, eine Beleuchtungseinheit bereitzustellen, die besonders für den militärischen und/oder den Simulationseinsatz geeignet ist.

Dies Aufgaben werden durch eine Zielvorrichtung nach Patentanspruch 1 gelöst. Die Vorteile dieser neuen Zielvorrichtung werden in der nachfolgenden Beschreibung aufgezeigt.

Kurze Beschreibung der Figuren

Es zeigen:
- Fig. 1: eine auf eine Waffe montierte Zielvorrichtung gemäss der Erfindung.
- Fig. 2: die Rückseite einer Zielvorrichtung gemäss der Erfindung.
- Fig. 3A: eine Zielvorrichtung mit Beugungsgitter im Betriebsmodus M1, gemäss der Erfindung.
- Fig. 3B: eine Zielvorrichtung mit Beugungsgitter im Betriebsmodus M2, gemäss der Erfindung.
- Fig. 4A: ein schwenkbares Beugungsgitter, gemäss der Erfindung.
- Fig. 4B: ein verschiebbares Beugungsgitter, gemäss der Erfindung.
- Fig. 4C: eine drehbare Scheibe mit unterschiedlichen Beugungsgittern, gemäss der Erfindung.
- Fig. 5: eine schematische Darstellung einer Zielvorrichtung mit Beugungsgitter, gemäss der Erfindung.
- Fig. 6: ein schematisches Blockdiagram zur Ansteuerung eines VCSELs, gemäss der Erfindung.

### Detaillierte Beschreibung der Erfindung

Im Folgenden wird die Erfindung anhand verschiedener Ausführungsbeispiele im Zusammenhang mit den Zeichnungen näher erläutert.

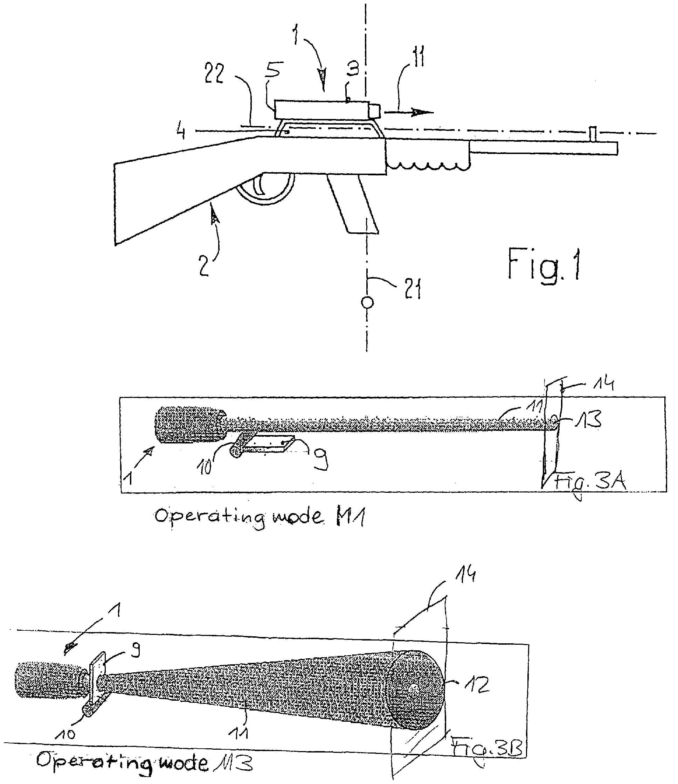

Fig. 1 zeigt, wie eine Zielvorrichtung 1 gemäss der Erfindung derart auf einer Waffe 2 montiert ist, dass die Schwerpunktlinie 21 der mit der Zielvorrichtung 1 ausgerüsteten Waffe 2 die Zielvorrichtung 1 selbst schneidet. Die Zielvorrichtung 1 umfasst einen Halbleiterlaser (nicht abgebildet in Fig. 1) und ein Gehäuse 3. In diesem Gehäuse 3 ist der genannte Halbleiterlaser sowie alle weiteren Elemente (Ansteuerung, Batterie, etc.) untergebracht. Das Gehäuse 3 hat eine Montageschiene 4, die es ermöglicht die Zielvorrichtung 1 auf die Waffe 2 zu montieren bzw. diese von der Waffe 1 zu trennen. In der vorliegenden Ausführungsform ist das Gehäuse 3 zylindrisch, um dem Schützen ein Zielen entlang der Visierlinie 22 zu ermöglichen. Die dem Schützen zugewandte Rückseite 5 des Gehäuses 3, siehe Fig. 2, weist in der vorliegenden Ausführungsform drei Anzeigeelemente 6, 7, 8 auf, die es dem Schützen ermöglichen, zu erkennen in welchem Betriebsmodus sich die Zielvorrichtung 1 befindet. Ein Drehschalter 15 ist vorgesehen, mit dem man einen der drei nachstehend beschriebenen Betriebsmodi M1, M2 oder M3 einstellen kann. Weitere Details hierzu werden im Folgenden Text erläutert.

Die erfindungsgemässe Zielvorrichtung 1 kann in mindestens in einem ersten (M1), einem zweiten (M2) und einem dritten Betriebsmodus (M3) betrieben werden. Für jeden diese Moden kann eine getrennte Anzeige 6, 7, 8 mit entsprechender Beschriftung M1, M2, M3 auf der Rückwand 5 vorgesehen werden. Es ist offensichtlich, dass diverse andere Anordnungen und Ausführungen möglich sind. So kann zum Beispiel die Anzeige in einem Sucher dargestellt werden, oder über ein akustisches Signal dem Schützen den Modus mitteilen.
Im ersten Bertriebsmodus (M1) tritt ein gebündelter Laserstrahl 11 aus der Zielvorrichtung 1 aus. Dieser Laserstrahl 11 weist eine Strahlendivergenz auf, die für den Einsatz der Zielvorrichtung 1 zum Anvisieren eines Zieles geeignet ist. Typischerweise liegt die Strahlendivergenz im Modus M1 zwischen 1 mrad und 5 mrad und vorzugsweise zwischen 2 mrad und 3 mrad. Damit ist der Quellenpunkt am Ziel deutlich für den Schützen sichtbar. Um diesen Quellenpunkt gibt es eine leichtes Streufeld am Ziel. In diesem ersten Betriebsmodus M1 dient die Zielvorrichtung als Zielquelle.

In der eingangs erwähnten europäischen Patentanmeldung 97120818.6 (EP 0 859 243 A1) ist ein Laseridentifikations/Simulationssystem zur Identifizierung eines Zieles bekannt. Dieses Laseridentifikations/Simulationssystem ist derart ausgebildet, dass eine codierte Laserstrahlung ausgesendet wird. Das Ziel (z.B. ein Simulationsteilnehmer oder Soldat) trägt Sensor-Mittel in Form einer Gurtvorrichtung zum Detektieren dieser Laserstrahlung und zur Umwandlung derselben in elektrische Signale. Die elektrische Signale werden einem Diskriminator zugeführt. Desweiteren weist eine solche Gurtvorrichtung Sender-Mittel auf, die nach Massgabe von im Diskriminator getroffenen Entscheidungen Meldungen an Empfänger-Mittel, die sich innerhalb oder ausserhalb des Laseridentifikations/Simulationssystems befinden, zurückzusenden.

Ein solches System wird in Waffen montiert, die normalerweise durch die Soldaten angewendet werden, wobei alle Teilnehmer an einer Übung, sowohl Personen wie Objekte, mit Sensoren ausgestattet sind, die eine mögliche Waffenwirkung auf den Teilnehmer registrieren. Die Wirkungsweise solcher bekannten Systeme, beispielsweise das sogenannte SIM-LAS, stellt die technischen Grundlagen eines Freund-Feind-Erkennungssystems dar, das auch mit der vorliegenden Erfindung angewendet werden kann.

In dem zweiten Betriebsmodus M2 weist der Laserstrahl 11 nun eine Strahlendivergenz auf, die grösser als 5 mrad und kleiner als 30 mrad ist, um ein einfaches Abfragen von Identifikationsinformation von einer solchen Gurtvorrichtung zu ermöglichen. Vorzugsweise liegt die Strahlendivergenz in diesem Modus M2 zwischen 10 mrad und 20 mrad. Wenn der Laserstrahl zu eng gebündelt wird, dann muss das Ziel sehr genau (ähnlich wie beim Abfeuern eines Schusses) anvisiert werden. Es ist vorteilhaft, wenn man nicht dermassen genau zielen muss, um einen Detektor der Gurtvorrichtung anzusprechen. In diesem zweiten Modus M2 wird die Zielvorrichtung 1 also als Identifikationsquelle eingesetzt. Es kann aber auch wichtig sein, dass der Strahl im Durchmesser nicht zu gross ist, um zu verhindern, dass hinter dem Ziel liegende Objekte interrogiert/identifiziert werden während das eigentliche Ziel nicht erreicht wird.

Wie im einleitenden Teil erwähnt, gibt es für einen Schützen, und insbesondere einen Soldaten, notwendig, die Umgebung auszuleuchten oder ein potentielles Ziel anzuleuchten. Dies ist besonders bei schlechter Sicht in der Nacht, bei Nebel, oder für den Fall das der Schütze eine Spezialbrille (z.B. ein Nachtsichtgerät) trägt, angezeigt. Nach der vorliegenden Erfindung kann nun die Zielvorrichtung einen dritten Betriebsmodus einnehmen, bei dem der Laserstrahl 11 eine derartige Aufweitung erfährt, dass die Zielvorrichtung 1 als Beleuchtungsvorrichtung einsetzbar ist. Zu diesem Zweck sollte die Strahlendivergenz grösser sein, als im zweiten Betriebsmodus. Vorzugsweise liegt die Strahlendivergenz im dritten Betriebsmodus zwischen 50 mrad und 100 mrad.

Eine derartige Aufweitung eines Laserstrahles könnte man mittels einer Linse erzielen. Es zeigt sich jedoch, das der Einsatz einer Linse einen gravierenden Nachteil hat. Eine solche Linse muss ganz genau mit der optischen Achse im Quellenstrahl des Laserstrahles 11 liegen. Ansonsten ergibt sich eine seitliche Versetzung des Laserstrahls 11, nachdem dieser die Linse passiert hat. Damit würde auch für den Beleuchtungsfall ein genaues Anvisieren erforderlich sein. Dies wiederum kostet Zeit, die unter Umständen nicht vorhanden ist. In einem Laboraufbau ist das genaue Positionieren einer Linse im Strahlengang kein Problem. In der Praxis, z.B. beim militärischen Einsatz, ist eine solch genaue Positionierung der Linse im Laserstrahl 11 kaum möglich. Wenn man weiterhin berücksichtigt, dass die Linse bewegbar gelagert werden muss, damit man sie bei Bedarf in den Laserstrahl 11 bewegen kann, zeigt sich, dass eine solche Lagerung mechanisch sehr anspruchsvoll und empfindlich ist. Ein Schlag auf die Zielvorrichtung 1, oder eine leichte Verschmutzung dieser Vorrichtung 1 würde das genaue Einbringen der Linse in den Laserstrahl 11 verunmöglichen.

Es hat sich gezeigt, dass diese Probleme umgangen werden können, wenn man statt der Linse ein Beugungsgitter (Grating) verwendet. Ein solches Beugungsgitter hat den grossen Vorteil gegenüber der erwähnten Linse, dass die Positionierung des Beugungsgitters in dem Laserstrahl nicht kritisch ist. Das Beugungsgitter muss nicht zwingend im Quellenstrahl des Lasers liegen. Das Beugungsgitter muss nicht zwingend in der optischen Achse des Laserstrahles liegen.

Ein Beugungsgitter, das zur Benutzung im Zusammenhang mit der vorliegenden Erfindung geeignet ist, kann z.B. auf einer Glasplatte oder einem Kunststoffträger realisiert werden. Auch geeignet für die Herstellung des Beugungsgitters sind diverse Plastikfolien. Eine solche Plastikfolie kann man entweder auf ein Substrat (z.B. eine Glasplatte) aufbringen, oder in einem geeigneten Rahmen aufspannen.

Ein holografisches Beugungsgitter ist gut geeignet für den hier beschriebenen Einsatz zum kontrollierten Aufweiten des Laserstrahles 11.

Das der Erfindung zugrunde liegende System ist in den Figuren 3A und 3B schematisch dargestellt. In diesen Figuren ist die Zielvorrichtung 1 gezeigt. Sie emittiert einen Laserstrahl 11, der eine bestimmte Strahlendivergenz aufweist. Der Einfachheit halber wird angenommen, dass in Fig. 3A die Zielvorrichtung 1 im Zustand M1 gezeigt ist, wobei der Laserstrahl eine Divergenz zwischen 1 mrad und 5 mrad aufweist. Damit wird ein Lichtpunkt 13 auf dem Ziel 14 erzeugt, der grössenmässig sehr begrenzt ist. Die Zielvorrichtung 1 weist ein Beugungsgitter 9 auf, das über einen Arm 10 schwenkbar gelagert ist.

Der Betriebsmodus M3 ist in Fig. 3B dargestellt. In diesem Modus M3 ist nun das Beugungsgitter 9 in den Laserstrahl 11 geschwenkt worden. Durch die Streuwirkung der Beugungsgitters ergibt sich die gewünschte Strahlaufweitung. Der Laserstrahl 11 hat nun eine Strahlendivergenz zwischen 30 mrad und 100 mrad. Auf dem Ziel 14 wird ein grosser Lichtpunkt 12 erzeugt. In diesem Betriebsmodus M3 ist es also möglich den Laserstrahl 11 zu Beleuchtungszwecken zu verwenden. Dank des Beugungsgitters ist es nun auch möglich in der Mitte des Leuchtflecks einen kleinen Anteil des ursprünglichen gebündelten Laserlichtes abzubilden. Damit ist dann ein gleichzeitiges Ausleuchten (M3) und Zielen (M1) möglich. Ohne ein genaues Anvisieren, z.B. durch das einfache Hochhalten der Waffe, kann der Schütze ein Ziel ausleuchten, oder durch Schwenken der Waffe eine Umgebung ausleuchten.

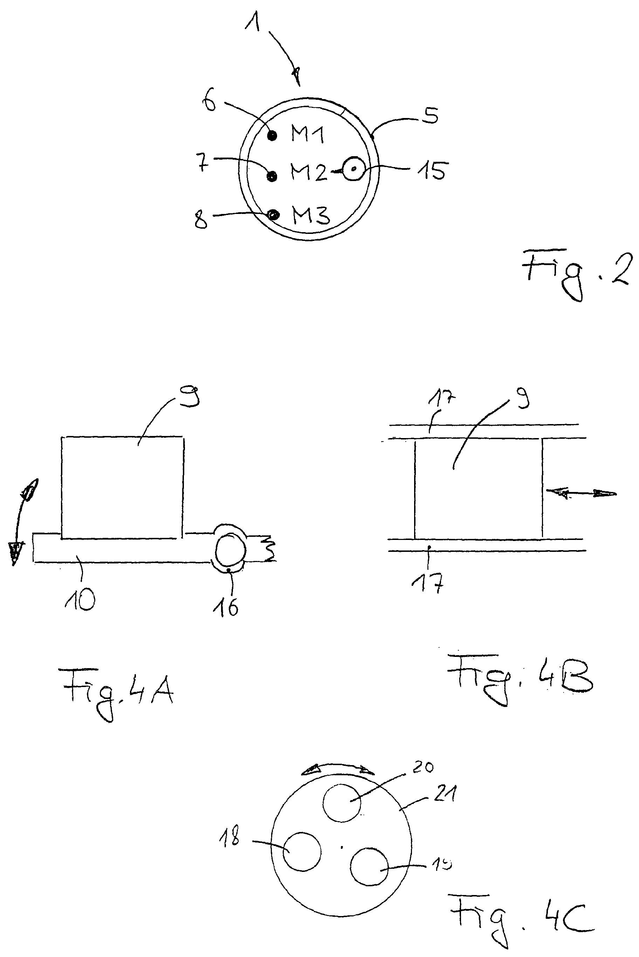

Das Einbringen des Beugungsgitter kann durch verschiedene mechanische Vorrichtungen erfolgen. Drei Beispiele sind schematisch in den Figuren 4A, 4B und 4C dargestellt. Eine Schwenkvorrichtung, die am oder in der Zielvorrichtung 1 befestigt ist, kann ein Gelenk 16 aufweisen, das es dem Schützen ermöglicht, das Beugungsgitter 9 in den Strahlengang des Laserstrahles zu klappen, wie durch den Doppelpfeil auf der linken Seite angedeutet. Diese Ausführungsform ist in Fig. 4A und in den Figuren 3A und 3B dargestellt. Es ist auch möglich das Beugungsgitter 9 in Schienen 17 zu führen, wobei es durch eine laterale Verschiebung (siehe Doppelpfeil) in den Strahlengang schiebbar ist, wie in Fig. 4B gezeigt.
Fig. 4C zeigt eine kreisförmige Scheibe 21 mit drei Beugungsgittern 18, 19, 20. Diese Scheibe 21 sitzt im Laserstrahl und kann gedreht werden, wir durch den Doppelpfeil angedeutet. Befindet sich das Beugungsgitter 18 vor dem Laserstrahl, so weist dieser eine Strahlendivergenz auf, wie sie im Betriebsmodus M1 erwünscht ist. Dreht man die Scheibe 21, um das Beugungsgitter 19 in den Strahl zu bringen, so wird eine dem Betriebsmodus M2 entsprechende Strahlendivergenz erzeugt. Das dritte Beugungsgitter 20 erzeugt dann die für den Modus M3 gewünschte Strahlendivergenz.

Es ist auch möglich mehrere solche Scheiben 21 mit Beugungsgittern vorzusehen, die jeweils gegeneinander verdrehbar im Laserstrahl sitzen.

Man kann das Einbringen des Beugungsgitter auch automatisieren. Zum Beispiel kann das Beugungsgitter durch Federkraft, oder durch einen Motor in die gewünschte Position gebracht werden. Die Federkraftverstellung eignet sich, um schlagartig vom Beleuchtungsmodus M3 oder dem Identifikationsmodus M2 in den Zielmodus M1 umzuschalten. Dabei kann eine vorgespannte Feder das Beugungsgitter 9 weg bewegen.

Setzt man einen Halbleiterlaser ein, der einen Laserstrahl 11 im nicht-sichtbaren Wellenlängenbereich aussendet, erhält man eine Beleuchtungsvorrichtung, deren Einsatz für das menschliche Auge unsichtbar ist. Ein beleuchtetes Ziel ist nur erkennbar, wenn man eine geeignete Brille (z.B. eine Nachtsichtbrille) trägt. Im Gefecht kann dies von Vorteil sein, da der Schütze seine Position zu erkennen gibt, wenn er eine Beleuchtungsvorrichtung benutzt, die sichtbares Licht aussendet. Auch kann die Person, die angeleuchtet wird erkennen, dass sie sich im Lichtkegel befindet. Dies ist unter Umständen nicht wünschenswert und kann mit einem Halbleiterlaser, der unsichtbares Licht aussendet vermieden werden.
Die erfindungsgemässe Zielvorrichtung sendet einen Laserstrahl 11 aus, der durch Beeinflussung der Strahlendivergenz zu verschiedenen Zwecken eingesetzt werden kann.

Bisher wurden drei verschiedene Betriebsmodi beschrieben. Um die Kommunikation bzw. Kompatibilität mit Gurtsystemen verschiedener Bauart und Bauform zu ermöglichen, kann man noch weitere Betriebsmodi vorsehen. Es ist zum Beispiel denkbar, dass die Zielvorrichtung einen Umschalter hat, der die Strahlendivergenz von einem Modus A1 in einen Modus A2 umschaltet, wobei die Strahlendivergenz jeweils unterschiedlich ist. Im Modus A1 kann diese Zielvorrichtung dann relativ unempfindlichen Sensoren älterer Bauart ansprechen, wohingegen im Modus A2 nur hochempfindliche Sensoren neuerer Bauart angeregt werden. Die Umschaltung von A1 nach A2 und umgekehrt erfolgt wiederum durch das Einbringen eines geeigneten Beugungsgitters, bzw. durch das Bewegen eines solchen Beugungsgitters von einer ersten Position in eine zweite Position.

Als Laserquelle sind Halbleiterlaser besonders geeignet. Man unterscheidet dabei zwei Arten von Halbleiterlasern. Die sogenannten Kanten-emittierende Laser (edge emitting lasers) haben eine Schichtstruktur, die durch vertikale Facetten an beiden Enden begrenzt ist. D.h., diese Laser haben eine rechteckige Form. Die Facetten sind entweder geätzt, oder gespalten (cleaved). Lichtwellen werden parallel in der aktiven Zone des Lasers von Facette zu Facette hin- und hergeschickt und erfahren eine Verstärkung, falls eine entsprechende Spannung angelegt ist. Das Laserlicht tritt durch eine der Facetten aus.

Bei der zweiten Art von Halbleiterlasern handelt es sich um sogenannte vertikal-emittierende Laser (Vertical-Cavity Surface-Emitting Laser; VCSEL). Diese Art von Lasern emittiert, wie der Name sagt, senkrecht zur Schichtstruktur und damit auch senkrecht zur Laseroberfläche. Typische VCSELs haben eine zylindrische Form. Die Vorteile einer solchen Struktur bestehen in einem relativ kleinen aktiven Volumen, einer radialsymmetrischen Nahfeldverteilung und in der Möglichkeit zur zweidimensionalen Integrierbarkeit. Die aktive Schicht(en) ist/sind üblicherweise nur wenige Atome dick. Das Laserlicht wird in der/den aktiven Schicht(en) verstärkt, wobei Elektronen diskrete Energieniveaus einnehmen können. Diese Energieniveaus sind durch eine Sperrzone (Halbleiterlücke) getrennt. Werden die Elektronen gezwungen die Halbleiterlücke zu überspringen, so emittieren Photonen der entsprechenden Energie. Im Prinzip besteht ein VCSEL aus zwei Braggreflektoren (DBRs). Ein DBR ist eine alternierende Schichtfolge zweier Halbleitermaterialien mit unterschiedlichem Brechungsindex, jeweils mit der Dicke einer halben Wellenlänge des Laserlichts. Im Bereich dieser Wellenlänge reflektiert der DBR Licht nahezu vollständig, zwei DBRs bilden somit einen Resonator hoher Güte. Ein Teil des Laserlichts wird aus dem oberen Braggspiegel ausgekoppelt.

Im Laufe der letzten Jahre haben sich verschiedenste VCSEL-Strukturen herausgebildet, die je nach Anwendung unterschiedlich komplex sind. VCSELs sind als Bauteile in verschieden Formen und Ausführungen kommerziell erhältlich. Zum Teil gibt es auch VCSELs mit integrierter Monitordiode. Dies ermöglicht den Aufbau eins Regelkreises, um z.B.: die maximal ausgesendete Lichtleistung zu beschränken, um Sicherheitsnormen einhalten zu können. Üblicherweise ist ein VCSEL ähnlich wie eine Leuchtdiode in Kunststoffgehäuse integriert, wobei sich im Strahlengang normalerweise eine optische Komponente (z.B. eine Linse) befindet. Typische Dimensionen eines VCSEL sind zwischen 2mm X 5mm (Breite X Höhe) und 10mm X 20mm.

VCSELs können einfacher hergestellt werden als die kanten-emittierenden Laser, da eine grosse Anzahl von VCSELs auf ein und demselben Trägermaterial hergestellt werden können. Ausserdem sind diese VCSELs üblicherweise kleiner. Es ist ein weiterer Vorteil der VCSELs, dass sie als ein Batch getestet werden können. Andere Laserdiode erfordern normalerweise individuelle Tests. Ein weiterer Vorteil von VCSELs liegt darin, dass diese sehr schmalbandiges Licht aussenden.

VCSELs mit Wellenlängen im infraroten Spektralbereich sind bereits weit verbreitet. Rote VCSELs emittieren mit einer Wellenlänge um 670 nm. Dazu werden im MOVPE (Metal Organic Vapor Deposition) Strukturen mit laseraktiven Schichten aus GalnP / AlGalnP und Braggspiegeln aus AIAs / AlGaAs hergestellt. Um eine hohe Stromdichte und einen schmalen Laserstrahl zu erzielen, werden kann man aus dem oberen, p-dotierten DBR kleine Säulen herausätzen (z.B. mit lonenstrahlätzen) und oben mit Metallkontakten versehen.
VCSELs sind mit Wellenlängen zwischen 600nm und 2000nm erhältlich. Es gibt zahlreiche VCSEL Hersteller, die detaillierte Datenblätter zu den von ihnen verkauffen VCSELs herausgeben, um eine entsprechende Schaltungsdimensionierung zu ermöglichen.

Der Laserstrahl, wie er von einem VCSEL emittiert wird weist eine geringe Divergenz auf. Ein kommerzieller VCSEL hat eine Strahlendivergenz zwischen 1 mrad und 10 mrad und vorzugsweise zwischen 3 mrad und 5 mrad. Dies ist ein Vorteil gegenüber anderen Lasern, deren Strahl für alle Anwendungen erst aufgeweitet werden muss. Ausserdem emittieren VCSELs typischerweise mit relativ grossen symmetrischen Aperturen, so dass der Laserstrahl runder und mit weniger Divergenz behaftet ist als bei herkömmlichen kanten-emittierenden Laserdiodenstrukturen.

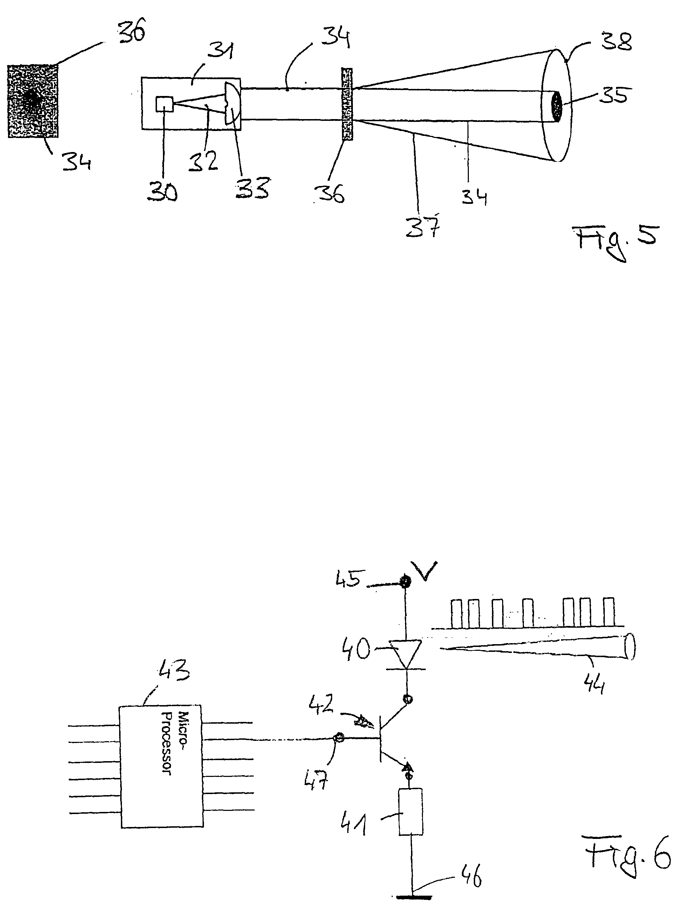

Fig. 5 ist eine schematische Darstellung einer weiteren Ausführungsform der vorliegenden Erfindung. Ein Halbleiterlaser 30 ist in eine Zielvorrichtung 31 integriert. Der vom Laser 30 emittiert einen Laserstrahl 32, der durch eine Linse 33 geführt wird. Dadurch ergibt sich ein Laserstrahl 34, der divergenzfrei oder nahezu divergenzfrei ist. Am Ziel ergibt sich ein Beleuchtungspunkt 35 von sehr kleinem, genau definiertem Umfang. Bei dem gezeigten Modus kann es sich zum Beispiel um den ersten Betriebsmodus (M1) handeln. Bringt man nun ein Beugungsgitter 36 in den Laserstrahl 34, so wird dieser zu einem Laserstrahl 37 aufgeweitet. Am Ziel ergibt sich ein grösserer Beleuchtungspunkt 38. Das Beugungsgitter 36 ist -links von der Zielvorrichtung gezeigt, um darzustellen wo der Laserstrahl 34 durch das Gitter 36 hindurch tritt.

Für die Ansteuerung eines VCSELs gibt es zahlreiche Möglichkeiten. Ein gangbarer Ansatz ist schematisch in Fig. 6 dargestellt. Wie gezeigt, wird der VCSEL 40 über einen Treibertransistor 42 (z.B. eine Bipolartransistor) und Vorwiderstand 41 angesteuert. Es handelt sich hierbei um eine Kollektorschaltung, da sich der VCSEL 40 im Kollektorkreis des Transistors 42 befindet. Die Basiselektrode 47 des Transistors 42 ist mit einem Mikroprozessor 43 verbunden. Ein solcher Kollektorkreis dient als Konstantstromquelle. Durch diesen Mikroprozessor 43 wird der Transistors 42 und dadurch auch der VCSEL 40 gesteuert. Legt man eine Betriebsspannung V zwischen dem Pluspol 45 und der Masse 46 an, so kann durch Anlegen eines Signals an der Basiselektrode 47 des Transistors 42 ein Strom durch das VCSEL 40 fliessen. Fliesst ein solcher Strom, so emittiert der VCSEL 40 einen Laserstrahl 44. Wenn der Mikroprozessor 43 das Signal an der Basiselektrode 47 des Transistors 42 moduliert, dann ergibt sich ein gepulster Laserstrahl 44, wie schematisch oberhalb dieses Laserstrahles gezeigt. Anstatt den VCSEL 40 über einen Mikroprozessor 43 anzusteuern kann man auch eine geeignete Gatterschaltung zur Ansteuerung verwenden.

In einer Ausführungsform, besteht die erfindungsgemässe Zielvorrichtung 1 aus einer Zieleinheit, die einen Halbleiterlaser zum Anvisieren eines Zieles aufweist. Desweiteren enthält die Zielvorrichtung 1 eine Identifikationseinheit, die mittels des gleichen Laserstrahles 11 von dem Ziel Identifikationsinformation abfragt. Desweiteren ist eine Beleuchtungseinheit in die Zielvorrichtung 1 integriert, die es ermöglicht mittels des Laserstrahles 11 ein Ziel zu beleuchten. Die Komponenten der Zieleinheit, der Identifikationseinheit und der Beleuchtungseinheit können entweder separat ausgeführt werden, oder alle bzw. ein Teil der Komponenten kann von allen drei Einheiten benutzt werden. In jedem Fall wird jedoch der Halbleiterlaser von allen Einheiten benutzt, wobei die Strahlendivergenz entsprechend dem Einsatzzweck verändert wird. Dazu wird ein oder mehrere Beugungsgitter in den Laserstrahl gebracht. Zusätzlich zum Anpassen der Strahlendivergenz kann natürlich auch die Ansteuerung des Halbleiterlasers entsprechend umgeschaltet werden.

## Patentansprüche

1. Zielvorrichtung für Waffe, bestehend aus einer Zieleinheit, die einen Laser zum Anvisieren eines Zieles mittels eines von dem Laser ausgesendeten Laserstrahles (11) enthält, und einer Identifikationseinheit, die mittels des Laserstrahles (11) von dem Ziel Identifikationsinformation abfragt, **dadurch gekennzeichnet, dass** die Zielvorrichtung (1) eine Beleuchtungseinheit enthält, die es ermöglicht, mittels des Laserstrahles (11) das Ziel zu beleuchten, wobei der Laser ein Halbleiterlaser ist, der sowohl für der Zieleinheit, die Identifikationseinheit als auch die Beleuchtungseinheit benutzbar ist.

2. Zielvorrichtung nach Anspruch 1,
**dadurch gekennzeichnet, dass**
der Halbleiterlaser aus mehreren Halbleiterschichten aufgebaut ist, wobei der Laserstrahl (11) senkrecht zu den Halbleiterschichten abgestrahlt wird.

3. Zielvorrichtung nach Anspruch 2,
**dadurch gekennzeichnet, dass**
der Halbleiterlaser ein Vertical Cavity Surface Emitting Laser (VCSEL) ist.

4. Zielvorrichtung nach Anspruch 2 oder 3,
**dadurch gekennzeichnet, dass**
der Halbleiterlaser mindestens eine optische Komponente enthält, die in den Halbleiterlaser integriert ist.

5. Zielvorrichtung nach Anspruch 4,
**dadurch gekennzeichnet, dass**
die optische Komponente eine optische Linse ist, die sich im Strahlengang des Laserstrahles (11) befindet.

6. Zielvorrichtung nach Anspruch 1,
**dadurch gekennzeichnet, dass**
der Laserstrahl (11) eine Strahlendivergenz aufweist, die mindestens einen ersten Zustand (M1) und eine zweiten Zustand (M2) annehmen kann, wobei der Laserstrahl (11) in dem ersten Zustand (M1) eine Strahlendivergenz zwischen 1 mrad und 5 mrad aufweist, um ein genaues Anvisieren des Zieles zu ermöglichen, und in dem zweiten Zustand (M2) eine Strahlendivergenz aufweist, die grösser als 5 mrad ist, um ein einfaches Abfragen der Identifikationsinformation vom Ziel zu ermöglichen.

7. Zielvorrichtung nach Anspruch 6,
**dadurch gekennzeichnet, dass**
die Strahlendivergenz einen dritten Zustand (M3) annehmen kann, bei dem die Strahlendivergenz grösser ist als die Strahlendivergenz im zweiten Zustand (M2).

8. Zielvorrichtung nach Anspruch 6, **dadurch gekennzeichnet, dass**
ein Beugungsgitter (9) derart schwenkbar an oder in der Zielvorrichtung (1) befestigt ist, dass dieses mittels einer Schwenkbewegung in den Laserstrahl (11) bewegbar ist wobei die Strahlendivergenz dadurch einen der genannten Zustände (M1, M2, M3) annimmt.

9. Zielvorrichtung nach Anspruch 6,
**dadurch gekennzeichnet, dass**
mindestens zwei Beugungsgitter (9) derart schwenkbar an oder in der Zielvorrichtung (1) befestigt sind, dass diese mittels Schwenkbewegung einzeln oder gemeinsam in den Laserstrahl (11) bewegbar ist wobei die Strahlendivergenz je einen der genannten Zustände (M1, M2, M3) annimmt.

10. Zielvorrichtung nach Anspruch 6,
**dadurch gekennzeichnet, dass**
ein Beugungsgitter (9) derart schwenkbar an oder in der Zielvorrichtung (1) befestigt ist, dass dieses mittels Schwenkbewegung derart in den Laserstrahl (11) bewegbar ist, dass dieses dort eine erste Position und eine zweite Position einnimmt, wobei in der ersten Position die Strahlendivergenz einen der drei genannten Zustände (M1) annimmt und in der zweiten Position einen anderen (M2, M3) der drei Zustände annimmt.

11. Zielvorrichtung nach Anspruch 10,
**dadurch gekennzeichnet, dass**
das Beugungsgitter (9) einen ersten Bereich aufweist damit eine vorbestimmte Strahlendivergenz erzeugbar ist wenn sich das Beugungsgitter (9) in der ersten Position befindet, und einen zweiten Bereich aufweist damit eine vorbestimmte andere Strahlendivergenz erzeugbar ist wenn sich das Beugungsgitter (9) in der zweiten Position befindet.

12. Zielvorrichtung nach Anspruch 1,
**dadurch gekennzeichnet, dass**
die Zielvorrichtung eine Vorrichtung (15), vorzugsweise einen Taster, aufweist, durch dessen Betätigung die Beleuchtungseinheit aktiviert wird, um das Ziel mit dem Laserstrahl (11) zu beleuchten.

13. Zielvorrichtung nach Anspruch 1,
**dadurch gekennzeichnet, dass**
mehrere Beugungsgitter in dem Laserstrahl in Reihe geschaltet werden können.

14. Zielvorrichtung nach Anspruch 1,
**dadurch gekennzeichnet,**
**dass** durch die Reihenschaltung ein Zoomen erzielbar ist.
